# EUROPEAN PATENT APPLICATION

(11) **EP 3 901 885 A1**
(43) Date of publication of application: **27.10.2021**
(21) Application number: 21156031.3
(22) Date of filing: 09.02.2021
(51) Int. Cl.: G06Q 30/02, G06N 3/02

(54) **PROVIDING AN ENTITY WITH AN OPTION TO SELECT AN ONLINE SYSTEM USER TO CREATE CONTENT ON BEHALF OF THE ENTITY BASED ON CONTENT ASSOCIATED WITH THE ENTITY PREVIOUSLY CREATED BY THE USER**

(30) Priority: 20.04.2020 US 202016853080
(71) Applicant: Facebook, Inc., Menlo Park, CA 94025 (US)
(72) Inventor: MORIN, Steve, Menlo Park, CA 94025 (US); OUYANG, Xuewei, Menlo Park, CA 94025 (US); MROZ, Martin, Menlo Park, CA 94025 (US); MADAN, Anuj, Menlo Park, CA 94025 (US)
(74) Representative: Murgitroyd & Company

(57) **Abstract**

An online system accesses and applies a trained item detection model to attributes of each of one or more content items received from one or more content-providing users to predict a probability that each content item includes an image of an item associated with an entity. If the probability is at least a threshold probability for each of a set of content items, the online system identifies a content-providing user from whom the set of content items was received and determines a number of content items included among the set of content items. The online system computes a score for the content-providing user based on the number and ranks the content-providing user among additional content-providing users based on the score. The online system provides an option to the entity to select a set of content-providing users from the ranking authorized to create content items on behalf of the entity.

## Description

### TECHNICAL FIELD

This disclosure relates generally to online systems, and more specifically to providing an entity with an option to select an online system user to create content on behalf of the entity based on content associated with the entity previously created by the user.

### BACKGROUND

An online system allows its users to connect and communicate with other online system users. Users create profiles in the online system that are tied to their identities and include information about the users, such as interests and demographic information. The users may be individuals or entities such as corporations or charities. Because of the popularity of online systems and the significant amount of user-specific information maintained in online systems, an online system provides an ideal forum for allowing users to share content by creating content items for presentation to additional online system users. For example, users may share photos or videos they have uploaded by creating content items that include the photos or videos that are presented to additional users to whom they are connected in the online system.

Viewing users of an online system may subscribe to content provided by content-providing users of the online system by "following" the content-providing users. For example, if a viewing user of an online system follows a content-providing user of the online system, content included in a feed of content that may be presented to the viewing user (or "follower") includes content provided to the online system by the content-providing user. Content-providing users of an online system who have large numbers of followers may persuade their followers to perform various actions. Furthermore, entities (e.g., merchants) having a presence on an online system may derive a benefit from content items provided by content-providing users who have large numbers of followers if the content items include images of various items (e.g., products) that are associated with the entities. For example, suppose that a content-providing user of an online system who has a large number of followers provides a content item to the online system, in which the content item includes a photograph of the content-providing user wearing a pair of sunglasses and a link included in the content item corresponds to a page associated with a merchant having a presence on the online system at which the sunglasses may be purchased. In this example, since the content-providing user has a large number of followers who may be presented with the content item, online system users may be more likely to visit the page via the link and to purchase the sunglasses.

However, content items including images of items associated with entities may not include information identifying the items and/or entities with which the items are associated. In the above example, if the link to the page associated with the merchant maintained in the online system is not included in the content item, followers of the content-providing user are not as likely to visit the page and to purchase the sunglasses from the merchant in response to viewing the content item. In this example, even if the entity becomes aware of the content item, the entity may be unable to add the link to the content item since the entity did not create the content item. Thus, since entities may be unable to derive any benefit from content items including images of items with which they are associated, the entities may lack incentive to allocate the time and resources necessary to maintain their presence on online systems.

### SUMMARY

Content-providing users of an online system who have large numbers of followers may persuade their followers to perform various actions. Furthermore, entities having a presence on an online system may derive a benefit from content items provided by content-providing users who have large numbers of followers if the content items include images of various items that are associated with the entities. However, since content items including images of items associated with entities may not include information identifying the items and/or entities with which the items are associated, the entities may be unable to derive any benefit from the content items. Thus, the entities may lack incentive to allocate the time and resources necessary to maintain their presence on online systems.

To address this issue, an online system provides an entity with an option to select an online system user to create content on behalf of the entity based on content associated with the entity previously created by the user.

According to a first aspect, there is provided a method comprising: receiving one or more content items from one or more content-providing users of an online system, each of the one or more content items comprising an image; accessing an item detection model trained to predict a probability that a content item comprises an image of an item associated with an entity having a presence on the online system, the item detection model trained based at least in part on a plurality of content items comprising a plurality of images of one or more items associated with the entity and a set of attributes of each of the plurality of content items; applying the item detection model to a set of attributes of each of the one or more content items to predict the probability that the content item comprises an image of an item associated with the entity; determining whether the predicted probability is at least a threshold probability for each of the one or more content items; responsive to determining that the predicted probability is at least the threshold probability for each of a set of content items, identifying a content-providing user of the online system from whom the set of content items was received; determining a number of the set of content items received from the content-providing user for which the predicted probability is at least the threshold probability; computing a score for the content-providing user based at least in part on the number; ranking the content-providing user among a set of additional content-providing users of the online system based at least in part on the score; and providing, to the entity, an option to select a set of approved content-providing users of the online system from the ranking authorized to create one or more content items on behalf of the entity.

The ranking may be provided to the entity in association with a set of data associated with each of the set of approved content-providing users, wherein the set of data may be selected from the group consisting of: an audience of one or more content items associated with the entity received from each of the set of approved content-providing users, an amount of user engagement with each of one or more content items associated with the entity received from each of the set of approved content-providing users, a content of one or more content items associated with at least a threshold performance metric received from each of the set of approved content-providing users, information describing a history of violation of one or more policies by each of the set of approved content-providing users, a number of additional entities having a presence on the online system that have authorized each of the set of approved content-providing users to create content items on behalf of each additional entity, or any combination thereof.

The method may further comprise inferring a relationship between a content item and a topic associated with the entity based at least in part on information associated with the content item selected from the group consisting of: a tag associated with the topic, a link to a page associated with the topic, a caption associated with the topic, a location associated with the topic, a comment associated with the topic, or any combination thereof.

The set of attributes of each of the plurality of content items may comprise one or more of: a set of pixel values associated with an image of the plurality of images, a tag associated with a content item of the plurality of content items, a caption associated with a content item of the plurality of content items, a location associated with a content item of the plurality of content items, a comment associated with a content item of the plurality of content items, or an inferred relationship between a content item of the plurality of content items and the topic associated with the entity.

The set of attributes of each of the one or more content items may comprise one or more of: a set of pixel values associated with an image comprising the one or more content items, a tag associated with a content item of the one or more content items, a caption associated with a content item of the one or more content items, a location associated with a content item of the one or more content items, a comment associated with a content item of the one or more content items, or an inferred relationship between a content item of the one or more content items and the topic associated with the entity.

Computing the score for the content-providing user may comprise: retrieving information describing a time at which each of the set of content items for which the predicted probability is at least the threshold probability was received from the content-providing user; determining a frequency with which the content-providing user created the set of content items based at least in part on the number of the set of content items received from the content-providing user for which the predicted probability is at least the threshold probability and the time at which each of the set of content items for which the predicted probability is at least the threshold probability was received from the content-providing user; and computing the score for the content-providing user based at least in part on the frequency.

The method may further comprise: receiving, from the entity, a selection of an approved content-providing user authorized to create one or more content items on behalf of the entity. The method may further comprise: including one or more content items created on behalf of the entity by the approved content-providing user in a page associated with the entity maintained in the online system. The method may further comprise: adding a link to a page associated with the entity maintained in the online system to one or more content items created on behalf of the entity by the approved content-providing user. The method may further comprise: providing a share of an amount of compensation received by the entity to the approved content-providing user.

According to a second aspect, there is provided a computer program product comprising a computer readable storage medium having instructions encoded thereon that, when executed by a processor, cause the processor to: receive one or more content items from one or more content-providing users of an online system, each of the one or more content items comprising an image; access an item detection model trained to predict a probability that a content item comprises an image of an item associated with an entity having a presence on the online system, the item detection model trained based at least in part on a plurality of content items comprising a plurality of images of one or more items associated with the entity and a set of attributes of each of the plurality of content items; apply the item detection model to a set of attributes of each of the one or more content items to predict the probability that the content item comprises an image of an item associated with the entity; determine whether the predicted probability is at least a threshold probability for each of the one or more content items; responsive to determining that the predicted probability is at least the threshold probability for each of a set of content items, identify a content-providing user of the online system from whom the set of content items was received; determine a number of the set of content items received from the content-providing user for which the predicted probability is at least the threshold probability; compute a score for the content-providing user based at least in part on the number; rank the content-providing user among a set of additional content-providing users of the online system based at least in part on the score; and provide, to the entity, an option to select a set of approved content-providing users of the online system from the ranking authorized to create one or more content items on behalf of the entity.

The ranking may be provided to the entity in association with a set of data associated with each of the set of approved content-providing users, wherein the set of data may be selected from the group consisting of: an audience of one or more content items associated with the entity received from each of the set of approved content-providing users, an amount of user engagement with each of one or more content items associated with the entity received from each of the set of approved content-providing users, a content of one or more content items associated with at least a threshold performance metric received from each of the set of approved content-providing users, information describing a history of violation of one or more policies by each of the set of approved content-providing users, a number of additional entities having a presence on the online system that have authorized each of the set of approved content-providing users to create content items on behalf of each additional entity, or any combination thereof.

The computer-readable storage medium may further have instructions encoded thereon that, when executed by the processor, may cause the processor to: infer a relationship between a content item and a topic associated with the entity based at least in part on information associated with the content item selected from the group consisting of: a tag associated with the topic, a link to a page associated with the topic, a caption associated with the topic, a location associated with the topic, a comment associated with the topic, or any combination thereof. The set of attributes of each of the plurality of content items may comprise one or more of: a set of pixel values associated with an image of the plurality of images, a tag associated with a content item of the plurality of content items, a caption associated with a content item of the plurality of content items, a location associated or a content item of the plurality of content items, a comment associated with a content item of the plurality of content items, or an inferred relationship between a content item of the plurality of content items and the topic associated with the entity. The set of attributes of each of the one or more content items may comprises one or more of: a set of pixel values associated with an image comprising the one or more content items, a tag associated with a content item of the one or more content items, a caption associated with a content item of the one or more content items, a location associated with a content item of the one or more content items, a comment associated with a content item of the one or more content items, or an inferred relationship between a content item of the one or more content items and the topic associated with the entity.

Compute the score for the content-providing user may comprise: retrieve information describing a time at which each of the set of content items for which the predicted probability is at least the threshold probability was received from the content-providing user; determine a frequency with which the content-providing user created the set of content items based at least in part on the number of the set of content items received from the content-providing user for which the predicted probability is at least the threshold probability and the time at which each of the set of content items for which the predicted probability is at least the threshold probability was received from the content-providing user; and compute the score for the content-providing user based at least in part on the frequency.

The computer-readable storage medium may further have instructions encoded thereon that, when executed by the processor, may cause the processor to: receive, from the entity, a selection of an approved content-providing user authorized to create one or more content items on behalf of the entity. The computer-readable storage medium may further have instructions encoded thereon that, when executed by the processor, may cause the processor to: include one or more content items created on behalf of the entity by the approved content-providing user in a page associated with the entity maintained in the online system. The computer-readable storage medium may further have instructions encoded thereon that, when executed by the processor, may cause the processor to: add a link to a page associated with the entity maintained in the online system to one or more content items created on behalf of the entity by the approved content-providing user. The computer-readable storage medium may further have instructions encoded thereon that, when executed by the processor, may cause the processor to: provide a share of an amount of compensation received by the entity to the approved content-providing user.

### BRIEF DESCRIPTION OF THE DRAWINGS

FIG. 1 is a block diagram of a system environment in which an online system operates, in accordance with an embodiment.
FIG. 2 is a block diagram of an online system, in accordance with an embodiment.
FIG. 3 is a flow chart of a method for providing an entity with an option to select an online system user to create content on behalf of the entity based on content associated with the entity previously created by the user, in accordance with an embodiment.
FIG. 4 illustrates an example of a user interface including an option to select a set of online system users from a ranking to create one or more content items on behalf of an entity, in accordance with an embodiment.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### System Architecture

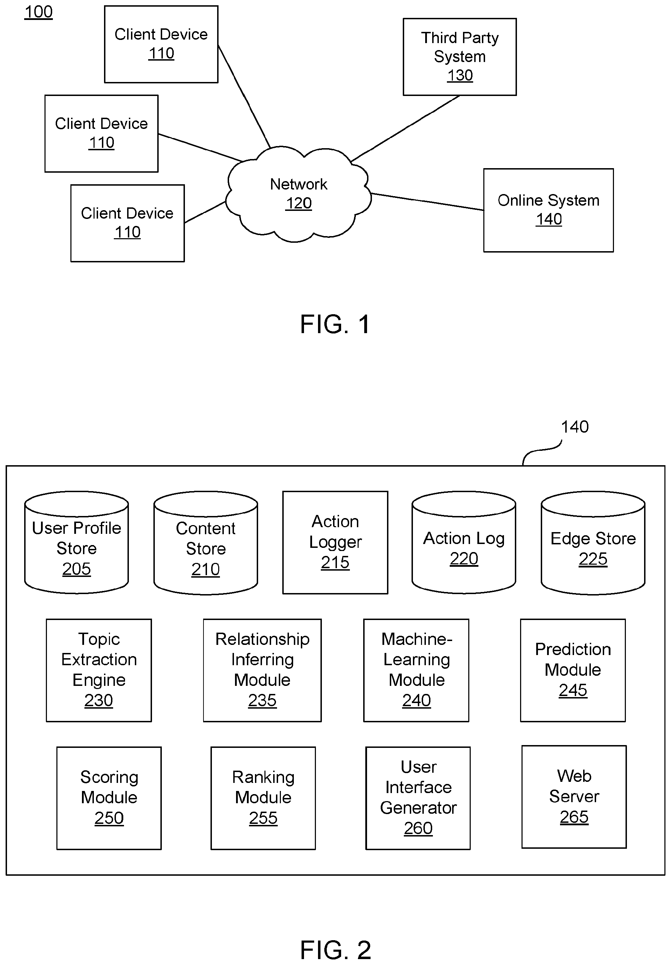

FIG. 1 is a block diagram of a system environment 100 for an online system 140. The system environment 100 shown by FIG. 1 comprises one or more client devices 110, a network 120, one or more third-party systems 130, and the online system 140. In alternative configurations, different and/or additional components may be included in the system environment 100.

The client devices 110 are one or more computing devices capable of receiving user input as well as transmitting and/or receiving data via the network 120. In one embodiment, a client device 110 is a conventional computer system, such as a desktop or a laptop computer. Alternatively, a client device 110 may be a device having computer functionality, such as a personal digital assistant (PDA), a mobile telephone, a smartphone or another suitable device. A client device 110 is configured to communicate via the network 120. In one embodiment, a client device 110 executes an application allowing a user of the client device 110 to interact with the online system 140. For example, a client device 110 executes a browser application to enable interaction between the client device 110 and the online system 140 via the network 120. In another embodiment, a client device 110 interacts with the online system 140 through an application programming interface (API) running on a native operating system of the client device 110, such as IOS® or ANDROID™.

The client devices 110 are configured to communicate via the network 120, which may comprise any combination of local area and/or wide area networks, using both wired and/or wireless communication systems. In one embodiment, the network 120 uses standard communications technologies and/or protocols. For example, the network 120 includes communication links using technologies such as Ethernet, 802.11, worldwide interoperability for microwave access (WiMAX), 3G, 4G, code division multiple access (CDMA), digital subscriber line (DSL), etc. Examples of networking protocols used for communicating via the network 120 include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 120 may be represented using any suitable format, such as hypertext markup language (HTML) or extensible markup language (XML). In some embodiments, all or some of the communication links of the network 120 may be encrypted using any suitable technique or techniques.

One or more third-party systems 130 may be coupled to the network 120 for communicating with the online system 140, which is further described below in conjunction with FIG. 2. In one embodiment, a third-party system 130 is an application provider communicating information describing applications for execution by a client device 110 or communicating data to client devices 110 for use by an application executing on the client device 110. In other embodiments, a third-party system 130 (e.g., a content publisher) provides content or other information for presentation via a client device 110. A third-party system 130 also may communicate information to the online system 140, such as advertisements, content, or information about an application provided by the third-party system 130.

FIG. 2 is a block diagram of an architecture of the online system 140. The online system 140 shown in FIG. 2 includes a user profile store 205, a content store 210, an action logger 215, an action log 220, an edge store 225, a topic extraction engine 230, a relationship inferring module 235, a machine-learning module 240, a prediction module 245, a scoring module 250, a ranking module 255, a user interface generator 260, and a web server 265. In other embodiments, the online system 140 may include additional, fewer, or different components for various applications. Conventional components such as network interfaces, security functions, load balancers, failover servers, management and network operations consoles, and the like are not shown so as to not obscure the details of the system architecture.

Each user of the online system 140 is associated with a user profile, which is stored in the user profile store 205. A user profile includes declarative information about the user that was explicitly shared by the user and also may include profile information inferred by the online system 140. In one embodiment, a user profile includes multiple data fields, each describing one or more attributes of the corresponding online system user. Examples of information stored in a user profile include biographic, demographic, and other types of descriptive information, such as work experience, educational history, gender, hobbies or preferences, locations and the like. A user profile also may store other information provided by the user, for example, images or videos. In certain embodiments, images of users may be tagged with information identifying the online system users displayed in an image, with information identifying the images in which a user is tagged stored in the user profile of the user. A user profile in the user profile store 205 also may maintain references to actions by the corresponding user performed on content items in the content store 210 and stored in the action log 220.

While user profiles in the user profile store 205 frequently are associated with individuals, allowing individuals to interact with each other via the online system 140, user profiles also may be stored for entities such as businesses or organizations. This allows an entity to establish a presence in the online system 140 for connecting and exchanging content with other online system users. The entity may post information about itself, about its products or provide other information to users of the online system 140 using a brand page associated with the entity's user profile. Other users of the online system 140 may connect to the brand page to receive information posted to the brand page or to receive information from the brand page. A user profile associated with the brand page may include information about the entity itself, providing users with background or informational data about the entity.

The content store 210 stores objects that each represent various types of content. Examples of content represented by an object include a page post, a status update, a photograph, a video, a link, a shared content item, a gaming application achievement, a check-in event at a local business, a page (e.g., a brand page), an advertisement, or any other type of content. Online system users may create objects stored by the content store 210, such as status updates, photos tagged by users to be associated with other objects in the online system 140, events, groups or applications. In some embodiments, objects are received from third-party applications or third-party applications separate from the online system 140. In one embodiment, objects in the content store 210 represent single pieces of content, or content "items." Hence, online system users are encouraged to communicate with each other by posting text and content items of various types of media to the online system 140 through various communication channels. This increases the amount of interaction of users with each other and increases the frequency with which users interact within the online system 140.

The action logger 215 receives communications about user actions internal to and/or external to the online system 140, populating the action log 220 with information about user actions. Examples of actions include adding a connection to another user, sending a message to another user, uploading an image, reading a message from another user, viewing content associated with another user, and attending an event posted by another user. In addition, a number of actions may involve an object and one or more particular users, so these actions are associated with those users as well and stored in the action log 220.

The action log 220 may be used by the online system 140 to track user actions in the online system 140, as well as actions in third-party systems 130 that communicate information to the online system 140. Users may interact with various objects in the online system 140, and information describing these interactions is stored in the action log 220. Examples of interactions with objects include: commenting on posts, sharing links, checking-in to physical locations via a client device 110, accessing content items, and any other suitable interactions. Additional examples of interactions with objects in the online system 140 that are included in the action log 220 include: commenting on a photo album, communicating with a user, establishing a connection with an object, joining an event, joining a group, creating an event, authorizing an application, using an application, expressing a preference for an object ("liking" the object), and engaging in a transaction. Additionally, the action log 220 may record a user's interactions with advertisements in the online system 140 as well as with other applications operating in the online system 140. In some embodiments, data from the action log 220 is used to infer interests or preferences of a user, augmenting the interests included in the user's user profile and allowing a more complete understanding of user preferences.

The action log 220 also may store user actions taken on a third-party system 130, such as an external website, and communicated to the online system 140. For example, an e-commerce website may recognize a user of an online system 140 through a social plug-in enabling the e-commerce website to identify the user of the online system 140. Because users of the online system 140 are uniquely identifiable, e-commerce websites, such as in the preceding example, may communicate information about a user's actions outside of the online system 140 to the online system 140 for association with the user. Hence, the action log 220 may record information about actions users perform on a third-party system 130, including webpage viewing histories, advertisements that were engaged, purchases made, and other patterns from shopping and buying. Additionally, actions a user performs via an application associated with a third-party system 130 and executing on a client device 110 may be communicated to the action logger 215 for storing in the action log 220 by the application for recordation and association with the user by the online system 140.

In one embodiment, the edge store 225 stores information describing connections between users and other objects in the online system 140 as edges. Some edges may be defined by users, allowing users to specify their relationships with other users. For example, users may generate edges with other users that parallel the users' real-life relationships, such as friends, coworkers, partners, and so forth. Other edges are generated when users interact with objects in the online system 140, such as expressing interest in a page in the online system 140, sharing a link with other users of the online system 140, and commenting on posts made by other users of the online system 140.

In one embodiment, an edge may include various features each representing characteristics of interactions between users, interactions between users and objects, or interactions between objects. For example, features included in an edge describe the rate of interaction between two users, how recently two users have interacted with each other, the rate or amount of information retrieved by one user about an object, or the number and types of comments posted by a user about an object. The features also may represent information describing a particular object or user. For example, a feature may represent the level of interest that a user has in a particular topic, the rate at which the user logs into the online system 140, or information describing demographic information about the user. Each feature may be associated with a source object or user, a target object or user, and a feature value. A feature may be specified as an expression based on values describing the source object or user, the target object or user, or interactions between the source object or user and target object or user; hence, an edge may be represented as one or more feature expressions.

The edge store 225 also stores information about edges, such as affinity scores for objects, interests, and other users. Affinity scores, or "affinities," may be computed by the online system 140 over time to approximate a user's interest in an object or in another user in the online system 140 based on the actions performed by the user. A user's affinity may be computed by the online system 140 over time to approximate the user's interest in an object, a topic, or another user in the online system 140 based on actions performed by the user. Computation of affinity is further described in U.S. Patent Application No. 12/978,265, filed on December 23, 2010, U.S. Patent Application No. 13/690,254, filed on November 30, 2012, U.S. Patent Application No. 13/689,969, filed on November 30, 2012, and U.S. Patent Application No. 13/690,088, filed on November 30, 2012, each of which is hereby incorporated by reference in its entirety. Multiple interactions between a user and a specific object may be stored as a single edge in the edge store 225, in one embodiment. Alternatively, each interaction between a user and a specific object is stored as a separate edge. In some embodiments, connections between users may be stored in the user profile store 205, or the user profile store 205 may access the edge store 225 to determine connections between users.

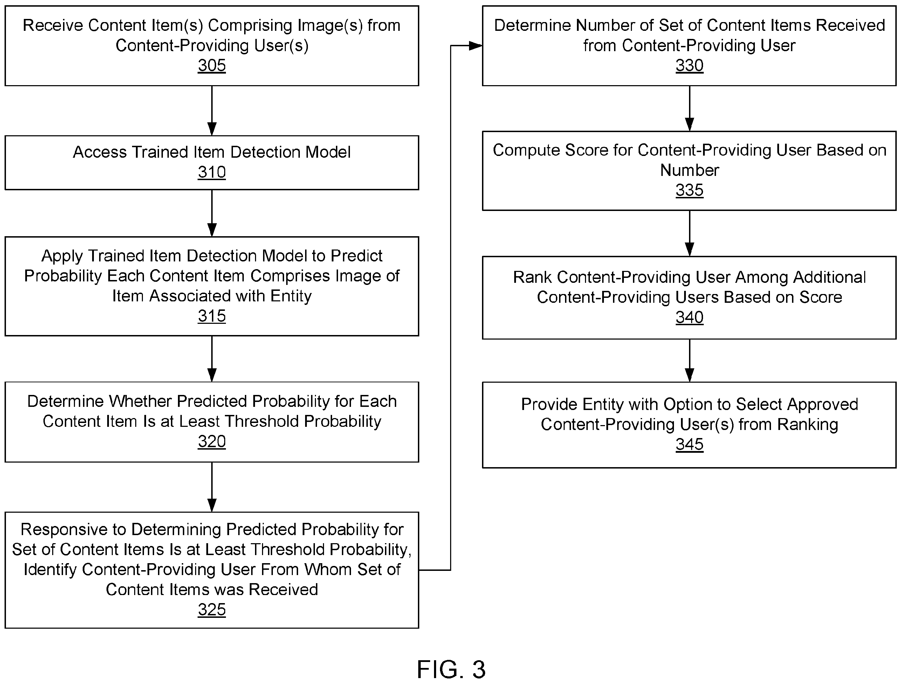

The online system 140 includes a topic extraction engine 230, which identifies one or more topics associated with objects in the content store 210. To identify topics associated with content items, the topic extraction engine 230 identifies anchor terms included in a content item and determines meanings of the anchor terms as further described in U.S. Patent Application No. 13/167,701 (U.S. Patent No. 9,779,385, issued on October 3, 2017), filed on June 24, 2011, which is hereby incorporated by reference in its entirety. For example, the topic extraction engine 230 determines one or more topics associated with a content item maintained in the content store 210. One or more topics associated with a content item are stored and associated with an object identifier corresponding to the content item. In various embodiments, associations between object identifiers and topics are stored in the topic extraction engine 230 or in the content store 210 to simplify retrieval of one or more topics associated with an object identifier or retrieval of object identifiers associated with a specified topic. Structured information associated with a content item also may be used to extract a topic associated with the content item. The functionality of the topic extraction engine 230 is further described below in conjunction with FIG. 3.

The relationship inferring module 235 may infer a relationship between a content item and a topic associated with an entity having a presence on the online system 140. The relationship inferring module 235 may do so based on various types of information associated with the content item. Information associated with a content item that may be used to infer a relationship between the content item and a topic associated with an entity may be included in a tag added to the content item, in which the tag is associated with the topic, a link to a page associated with the topic (e.g., a webpage or a page maintained in the online system 140), a caption associated with the topic, a location associated with the topic, a comment associated with the topic, an audience associated with the topic, etc. For example, suppose that tags added to multiple content items include a name or other information identifying an entity having a presence on the online system 140. In this example, if multiple comments on at least a threshold percentage of the content items include a phrase or a keyword, the relationship inferring module 235 may infer a relationship between the content item and a topic associated with the entity, in which the topic corresponds to the phrase/keyword. In various embodiments, information associated with a content item that may be used to infer a relationship between the content item and a topic associated with an entity may be included in one or more images or videos included in the content item. In such embodiments, once a trained item detection model has identified a topic that corresponds to an object included in the image(s) or video(s) (as described below), the relationship inferring module 235 may determine whether the topic is associated with the entity (as also described below) and may infer a relationship between the content item and the topic associated with the entity based on the determination. In some embodiments, the relationship inferring module 235 may infer relationships between a content item and multiple topics. For example, if information included in a tag added to a content item indicates that an image included in the content item corresponds to a dog shampoo sold by a particular merchant, the relationship inferring module 235 may infer a relationship between the content item and multiple topics associated with an entity, in which the topics correspond to dog and shampoo and the entity corresponds to the merchant.

In some embodiments, the relationship inferring module 235 infers a relationship between a content item and one or more topics associated with an entity having a presence on the online system 140 based on one or more topics associated with the content item identified by the topic extraction engine 230. In such embodiments, once the topic extraction engine 230 identifies a topic associated with the content item, the relationship inferring module 235 may determine whether the topic is associated with the entity (e.g., based on information identifying the entity included in the content item, based on information maintained in the online system 140, etc.). For example, suppose that the topic extraction engine 230 has identified a topic associated with a content item, in which the topic corresponds to restaurants in San Francisco. In this example, if information stored in the user profile store 205 indicates that an entity having a presence on the online system 140 is in the restaurant business and is located in San Francisco, the relationship inferring module 235 may determine that the entity is associated with the topic of restaurants in San Francisco and may infer a relationship between the content item and the topic associated with the entity. In some embodiments, if the relationship inferring module 235 infers a relationship between a content item and a topic associated with an entity, the relationship inferring module 23 5 may store information describing the relationship between the content item and the topic associated with the entity (e.g., in the content store 210). The functionality of the relationship inferring module 235 is further described below in conjunction with FIG. 3.

The machine-learning module 240 may train an item detection model to predict a probability that a content item includes an image of an item associated with an entity having a presence on the online system 140. Examples of items include products such as clothing items, electronic items, shoes, cars, or any other suitable types of items. Examples of entities associated with an item may include a manufacturer of the item, a merchant of the item, a distributor of the item, etc. The item detection model may be a convolutional neural network, a deep learning model, or any other suitable machine-learning model. In some embodiments, the machine-learning module 240 may train multiple machine-learning models that collectively predict a probability that a content item includes an image of an item associated with an entity having a presence on the online system 140.

The machine-learning module 240 may train the item detection model based on a training set of content items including images of one or more items associated with one or more entities having a presence on the online system 140, in which some of the training set of images include images of items associated with the entity/entities and some of the training set of images do not. The machine-learning module 240 also may train the item detection model based on a set of attributes of each of the training set of content items, as well as information indicating whether each of the training set of content items includes an image corresponding to an item associated with an entity having a presence on the online system 140. Examples of attributes of a content item include a set of pixel values associated with an image included in the content item, a tag associated with the content item, a caption associated with the content item, a location associated with the content item, a comment associated with the content item, an audience associated with the content item, an inferred relationship between the content item and a topic associated with an entity having a presence on the online system 140, etc. In embodiments in which the item detection model is trained based on a set of pixel values associated with an image included in a content item, the set of pixel values may describe a size of the image, a resolution of the image, a brightness of one or more pixels within the image, red, green and blue color component intensities of one or more pixels within the image, etc.

In some embodiments, once trained, the item detection model may first detect one or more objects within an image included in a content item (e.g., an image included in one or more frames of a video included in the content item). The item detection model may do so by applying one or more object detection methods to the image. The item detection model also may identify locations of objects detected within an image (e.g., by generating a bounding box surrounding each object). In some embodiments, the item detection model uses one or more object detection methods to detect objects within an image and to generate bounding boxes corresponding to each of the detected objects. When detecting objects included in an image, the item detection model also may identify a topic (e.g., categories or types of products or other items) corresponding to each object detected within the image based on attributes of the object. For example, an object detection method applied by the item detection model associates different topics with objects based on attributes of the objects and the item detection model associates a topic from the object detection method with a detected object. In this example, if an object detected within an image corresponds to a sports car of a specific make and model, based on attributes of the object (e.g., headlights, a windshield, four wheels, one or more side-view mirrors, etc.), an object detection method applied by the item detection model may associate the object with the topic of cars.

In embodiments in which the item detection model identifies a topic associated with each object detected within an image included in a content item, the machine-learning module 240 may train the item detection model based on a training set of images including images of items associated with different topics. In some embodiments, the training set of images may include publicly available information identifying different topics associated with images of various items. The item detection model also may be trained based on attributes that characterize each of the training set of images, as well as information indicating a topic associated with an item corresponding to each of the training set of images. Examples of attributes that characterize an image include shapes, edges, curves, textures, etc. detected within the image, components of various categories/types of items (e.g., surfaces, handles, wheels, fasteners, etc.), or any other suitable attributes that may characterize an image.

In some embodiments, once trained, the item detection model also may make one or more predictions that each correspond to a probability that an object detected within an image included in a content item corresponds to a specific item associated with an entity having a presence on the online system 140. The item detection model may make each prediction by comparing each object detected within an image to images of items (e.g., images of products included in a product catalog) associated with one or more entities having a presence on the online system 140. The item detection model then outputs one or more probabilities that each object detected within an image included in a content item matches different items associated with one or more entities having a presence on the online system 140.

In embodiments in which the item detection model predicts a probability that an object detected within an image corresponds to a specific item associated with an entity having a presence on the online system 140, the machine-learning module 240 may train the item detection model based on comparisons of objects detected within images to images of items associated with one or more entities having a presence on the online system 140. In some embodiments, the machine-learning module 240 trains the item detection model to predict a probability that an object detected within an image matches an item associated with an entity having a presence on the online system 140 based on prior matching of objects detected within images to different items associated with entities having a presence on the online system 140. For example, the machine-learning module 240 applies a label to an object detected within an image indicating that the object matches an item associated with an entity based on attributes of the object (e.g., logos, trademarks, emblems, icons, patterns, prints, etc.). From the labeled attributes of objects extracted from images, the machine-learning module 240 trains the item detection model using any suitable training method or combination of training methods (e.g., back propagation if the item detection model is a neural network, curve fitting techniques if the item detection model is a linear regression model, etc.). The functionality of the machine-learning module 240 is further described below in conjunction with FIG. 3.

The prediction module 245 accesses (e.g., as shown in step 310 of FIG. 3) the trained item detection model and applies (e.g., as shown in step 315 of FIG. 3) the item detection model to a set of attributes of a content item to predict a probability that the content item includes an image of an item associated with an entity having a presence on the online system 140. In some embodiments, the item detection model may be trained by the machine-learning module 240, while in other embodiments, the item detection model may be trained by a third-party system 130. To apply the item detection model to predict a probability that a content item includes an image of an item associated with an entity having a presence on the online system 140, the prediction module 245 provides an input to the item detection model that includes a set of attributes of the content item. As described above, examples of attributes of a content item may include a set of pixel values associated with an image included in the content item, a tag associated with the content item, a caption associated with the content item, a location associated with the content item, a comment associated with the content item, an audience associated with the content item, an inferred relationship between the content item and a topic associated with an entity having a presence on the online system 140, etc. Based on the set of attributes of the content item, the item detection model predicts a probability that the content item includes an image of an item associated with an entity having a presence on the online system 140. The prediction module 245 then receives an output from the item detection model corresponding to the predicted probability. In some embodiments, the prediction module 245 may access and apply multiple machine-learning models that collectively perform the function of the item detection model.

Once the prediction module 245 has applied the item detection model to predict a probability that a content item includes an image of an item associated with an entity having a presence on the online system 140, the prediction module 245 determines (e.g., as shown in step 320 of FIG. 3) whether the predicted probability is at least a threshold probability. The prediction module 245 may do so by comparing the predicted probability to the threshold probability and then determining whether the predicted probability is at least the threshold probability based on the comparison. For example, suppose that an output received by the prediction module 245 from the item prediction model corresponds to an 85.1% probability that a content item includes an image of an item associated with an entity having a presence on the online system 140. In this example, if the threshold probability corresponds to an 85% probability, the prediction module 245 determines that the predicted probability is at least the threshold probability since 85.1% is equal to or greater than 85%. Alternatively, in the above example, if the output received by the prediction module 245 from the item detection model corresponds to an 84% probability, the prediction module 245 determines that the predicted probability is less than the threshold probability since 84% is not equal to or greater than 85%. The functionality of the prediction module 245 is further described below in conjunction with FIG. 3.

The scoring module 250 identifies (e.g., as shown in step 325 of FIG. 3) a content-providing user of the online system 140 from whom a set of content items was received, in which each of the set of content items is associated with a probability predicted by the item prediction model that is at least a threshold probability. In some embodiments, the scoring module 250 may identify the content-providing user based on information stored in the content store 210, the action log 220, and/or the edge store 225. For example, suppose that the prediction module 245 has determined that a probability that a content item includes an image of an item associated with an entity having a presence on the online system 140 is at least a threshold probability. In this example, the scoring module 250 may access the content store 210, the action log 220, and/or the edge store 225 and retrieve information identifying a content-providing user of the online system 140 (e.g., a username or other user identifier) from whom the content item was received. In the above example, the scoring module 250 may repeat this process for each content item included in a set of content items received from the same content-providing user. In some embodiments, the scoring module 250 also may retrieve information describing a time at which each of the set of content items was received from the content-providing user. In the above example, the scoring module 250 may retrieve information from the action log 220 describing a date and a time at which the online system 140 received each of the set of content items from the content-providing user.

The scoring module 250 also determines (e.g., as shown in step 330 of FIG. 3) a number of content items included among a set of content items received from a content-providing user of the online system 140, in which each of the set of content items is associated with a probability predicted by the item prediction model that is at least a threshold probability. In some embodiments, the scoring module 250 may determine the number of content items included among the set of content items by incrementing a count associated with the content-providing user. For example, the scoring module 250 may increment a count associated with a content-providing user by a value of one each time the scoring module 250 determines that a predicted probability associated with a content item received from the content-providing user is at least a threshold probability. In alternative embodiments, once the scoring module 250 has identified the content-providing user from whom the set of content items was received, the scoring module 250 may determine a number of content items included among the set of content items by computing a sum of the number of content items included among the set of content items.

The scoring module 250 also computes (e.g., as shown in step 335 of FIG. 3) a score for a content-providing user of the online system 140. The scoring module 250 may compute the score based on a number of content items included among a set of content items received from the content-providing user, in which each of the set of content items is associated with a probability predicted by the item prediction model that is at least a threshold probability. For example, the scoring module 250 may compute a score for a content-providing user that is proportional to a number of content items included among a set of content items received from the content-providing user, in which each of the set of content items is associated with a probability predicted by the item prediction model that is at least a threshold probability. In some embodiments, the scoring module 250 also or alternatively may compute a score for a content-providing user based on additional values associated with a set of content items received from the content-providing user, in which each of the set of content items is associated with a probability predicted by the item prediction model that is at least a threshold probability. Examples of such values include a value of a performance metric associated with each of the set of content items, a frequency with which the content-providing user created the set of content items, etc.

In embodiments in which the scoring module 250 computes a score for a content-providing user based on a frequency with which the content-providing user created a set of content items, the scoring module 250 may determine the frequency with which the content-providing user created the set of content items. For example, suppose that the scoring module 250 has determined a number of content items included among a set of content items received from a content-providing user of the online system 140, in which each of the set of content items is associated with a probability predicted by the item prediction model that is at least a threshold probability. In this example, suppose also that the scoring module 250 has retrieved information describing a time at which each of the set of content items was received from the content-providing user. Continuing with this example, the scoring module 250 may determine an amount of time that has elapsed between a time that a content item included among the set of content items was first received from the content-providing user and a time that a content item included among the set of content items was last received from the content-providing user. In this example, the scoring module 250 may then determine a frequency with which the content-providing user created the set of content items by dividing the number of content items by the amount of time that has elapsed. In the above example, the scoring module 250 may compute the score for the content-providing user based on the frequency, such that the score is proportional to the frequency. The functionality of the scoring module 250 is further described below in conjunction with FIG. 3.

The ranking module 255 ranks (e.g., as shown in step 340 of FIG. 3) a content-providing user of the online system 140 among a set of additional content-providing users of the online system 140. The ranking module 255 may rank the content-providing user among the set of additional content-providing users based on a score for the content-providing user computed by the scoring module 250. For example, the ranking module 255 may rank a content-providing user among a set of additional content-providing users based on a score associated with each user, in which a highest ranked content-providing user is associated with a highest score and a lowest ranked content-providing user is associated with a lowest score. In some embodiments, the ranking module 255 may include a content-providing user in a ranking only if the content-providing user is associated with a score that is at least a threshold score. In the above example, the ranking module 255 may compare the score associated with each content-providing user to a threshold score and may not include any content-providing users who are not associated with at least the threshold score in the ranking. The ranking module 255 is further described below in conjunction with FIG. 3.

The user interface generator 260 generates a user interface that includes an option to select a set of content-providing users of the online system 140 from a ranking of one or more content-providing users of the online system 140. For example, once the ranking module 255 has ranked a content-providing user of the online system 140 among a set of additional content-providing users of the online system 140, the user interface generator 260 may generate a user interface that includes the ranking. In some embodiments, the user interface also may include one or more interactive elements (e.g., check boxes, buttons, radio buttons, etc.) allowing an entity to whom the user interface is presented to select a set of content-providing users. In the above example, each content-providing user may be associated with an interactive element within the user interface, such that an entity being presented with the user interface may select a content-providing user by interacting with the corresponding interactive element.

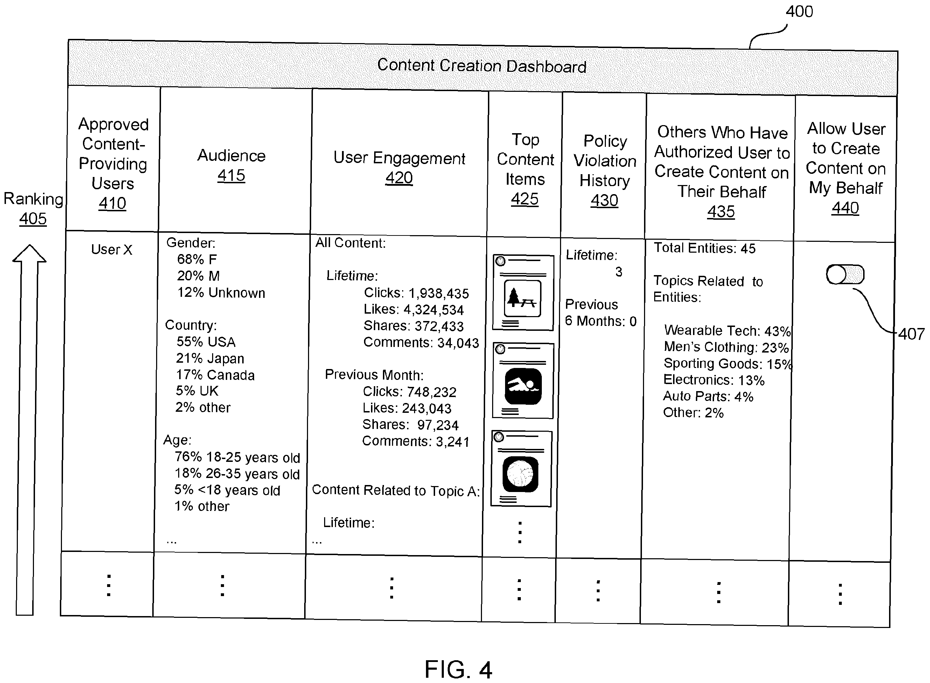

In some embodiments, the user interface generated by the user interface generator 260 may include a set of data associated with each content-providing user included in the ranking. In some embodiments, the set of data may include an audience of one or more content items associated with an entity received from each content-providing user, an amount of user engagement with each of one or more content items associated with an entity received from each content-providing user, a content of one or more content items associated with at least a threshold performance metric received from each content-providing user, information describing a history of violation of one or more policies by each content-providing user, a number of additional entities having a presence on the online system 140 that have authorized each content-providing user to create content items on behalf of each additional entity, etc. For example, a set of data associated with a content-providing user included in the user interface may include demographic information (e.g., gender, geographic location, age, etc.) associated with an audience of a set of content items associated with an entity received from the content-providing user, and an amount of user engagement (e.g., clicks, likes, shares, comments, etc.) associated with each of the set of content items for various time periods. In the above example, the set of data also may include the content of the most popular content items received from the content-providing user, information describing a history of violation of one or more policies by the content-providing user over various time periods, and information describing additional entities that have authorized the content-providing user to create content items on their behalf (e.g., the total number of entities, industries/topics related to the entities, etc.). The functionality of the user interface generator 260 is further described below in conjunction with FIGS. 3 and 4.

The web server 265 links the online system 140 via the network 120 to the one or more client devices 110, as well as to the one or more third-party systems 130. The web server 265 serves web pages, as well as other content, such as JAVA®, FLASH®, XML and so forth. The web server 265 may receive and route messages between the online system 140 and the client device 110, for example, instant messages, queued messages (e.g., email), text messages, short message service (SMS) messages, or messages sent using any other suitable messaging technique. A user may send a request to the web server 265 to upload information (e.g., images or videos) that are stored in the content store 210. Additionally, the web server 265 may provide application programming interface (API) functionality to send data directly to native client device operating systems, such as IOS®, ANDROID™, WEBOS® or BlackberryOS.

### Providing an Entity With an Option to Select an Online System User to Create Content on Behalf of the Entity Based on Content Associated with the Entity Previously Created by the User

FIG. 3 is a flow chart of a method for providing an entity with an option to select an online system user to create content on behalf of the entity based on content associated with the entity previously created by the user. In other embodiments, the method may include different and/or additional steps than those shown in FIG. 3. Additionally, steps of the method may be performed in a different order than the order described in conjunction with FIG. 3.

The online system 140 receives 305 one or more content items from one or more content-providing users of the online system 140, in which each content item includes an image. For example, the online system 140 may receive 305 one or more content items that each include a caption and an image from a content-providing user. In some embodiments, each content item received 305 from a content-providing user also or alternatively may include additional data, such as video data, audio data, text data (e.g., in one or more tags), one or more additional images, etc. In embodiments in which a content item received 305 from a content-providing user includes video data, an image may be included in the video data. For example, an image may be included in one or more frames of a video included in a content item received 305 from a content-providing user.

The online system 140 then accesses 310 (e.g., using the prediction module 245) a trained item detection model and applies 315 (e.g., using the prediction module 245) the item detection model to a set of attributes of each of the received content items to predict a probability that the content item includes an image of an item associated with an entity having a presence on the online system 140. In some embodiments, the item detection model may be trained by the online system 140 (e.g., using the machine-learning module 240), while in other embodiments, the item detection model may be trained by a third-party system 130. To apply 315 the item detection model to predict a probability that a content item includes an image of an item associated with an entity having a presence on the online system 140, the online system 140 provides an input to the item detection model that includes a set of attributes of the content item. As described above, examples of attributes of a content item may include a set of pixel values associated with an image included in the content item, a tag associated with the content item, a caption associated with the content item, a location associated with the content item, a comment associated with the content item, an audience associated with the content item, an inferred relationship between the content item and a topic associated with the entity, etc. In embodiments in which a set of attributes of a content item included in the input provided to the item detection model includes an inferred relationship between the content item and a topic associated with the entity, the relationship between the content item and the topic may be inferred by the online system 140 (e.g., using the topic extraction engine 230 and/or the relationship inferring module 235). Based on the set of attributes of the content item, the item detection model predicts a probability that the content item includes an image of an item associated with the entity. The online system 140 then receives an output from the item detection model corresponding to the predicted probability. In some embodiments, the online system 140 may access and apply multiple machine-learning models that collectively perform the function of the item detection model.

Once the online system 140 has applied 315 the item detection model to predict a probability that each of the received content items includes an image of an item associated with the entity, the online system 140 determines 320 (e.g., using the prediction module 245) whether the predicted probability is at least a threshold probability for each content item. The online system 140 may do so by comparing the predicted probability for each content item to the threshold probability and then determining 320 whether the predicted probability is at least the threshold probability based on the comparison. For example, suppose that an output received from the item prediction model corresponds to an 85.1% probability that a content item includes an image of an item associated with the entity. In this example, if the threshold probability corresponds to an 85% probability, the online system 140 determines 320 that the predicted probability is at least the threshold probability since 85.1% is equal to or greater than 85%. Alternatively, in the above example, if the output received from the item detection model corresponds to an 84% probability, the online system 140 determines 320 that the predicted probability is less than the threshold probability since 84% is not equal to or greater than 85%.

Responsive to determining 320 that the predicted probability is at least the threshold probability for each of a set of the content items received 305 from the one or more content-providing users, the online system 140 identifies 325 (e.g., using the scoring module 250) a content-providing user of the online system 140 from whom the set of content items was received 305. In some embodiments, the online system 140 may identify 325 the content-providing user based on information maintained in the online system 140 (e.g., in the content store 210, the action log 220, and/or the edge store 225). For example, suppose that the online system 140 has determined 320 that a probability that a content item includes an image of an item associated with the entity is at least a threshold probability. In this example, the online system 140 may access the content store 210, the action log 220, and/or the edge store 225 and retrieve information identifying a content-providing user of the online system 140 (e.g., a username or other user identifier) from whom the content item was received 305. In the above example, the online system 140 may repeat this process for each content item included in a set of content items received 305 from the same content-providing user. In some embodiments, the online system 140 also may retrieve information describing a time at which each of the set of content items was received 305 from the content-providing user. In the above example, the online system 140 may retrieve information from the action log 220 describing a date and a time at which the online system 140 received 305 each of the set of content items from the content-providing user.

The online system 140 then determines 330 (e.g., using the scoring module 250) a number of content items included among the set of content items received 305 from the content-providing user identified 325 by the online system 140. In some embodiments, the online system 140 may determine 330 the number of content items included among the set of content items by incrementing a count associated with the content-providing user. For example, the online system 140 may increment a count associated with the content-providing user by a value of one each time the online system 140 determines 320 that a predicted probability associated with a content item received 305 from the content-providing user is at least the threshold probability. In alternative embodiments, once the online system 140 has identified 325 the content-providing user from whom the set of content items was received 305, the online system 140 may determine 330 a number of content items included among the set of content items by computing a sum of the number of content items included among the set of content items.

The online system 140 then computes 335 (e.g., using the scoring module 250) a score for the content-providing user. The online system 140 may compute 335 the score based on the number of content items included among the set of content items received 305 from the content-providing user. For example, the score computed 335 by the online system 140 for the content-providing user may be proportional to the number of content items included among the set of content items received 305 from the content-providing user. In some embodiments, the online system 140 also or alternatively may compute 335 the score for the content-providing user based on additional values associated with the set of content items received 305 from the content-providing user. Examples of such values include a value of a performance metric associated with each of the set of content items, a frequency with which the content-providing user created the set of content items, etc.

In embodiments in which the online system 140 computes 335 the score for the content-providing user based on a frequency with which the content-providing user created the set of content items, the online system 140 may determine the frequency with which the content-providing user created the set of content items. For example, suppose that the online system 140 has determined 330 the number of content items included among the set of content items received 305 from the content-providing user, in which each of the set of content items is associated with a probability predicted by the item prediction model that is at least the threshold probability. In this example, suppose also that the online system 140 has retrieved information describing a time at which each of the set of content items was received 305 from the content-providing user. Continuing with this example, the online system 140 may determine an amount of time that has elapsed between a time that a content item included among the set of content items was first received 305 from the content-providing user and a time that a content item included among the set of content items was last received 305 from the content-providing user. In this example, the online system 140 may then determine a frequency with which the content-providing user created the set of content items by dividing the number of content items by the amount of time that has elapsed. In the above example, the online system 140 may compute 335 the score for the content-providing user based on the frequency, such that the score is proportional to the frequency.

The online system 140 then ranks 340 (e.g., using the ranking module 255) the content-providing user among a set of additional content-providing users of the online system 140. The online system 140 may rank 340 the content-providing user among the set of additional content-providing users based on the score for the content-providing user. For example, the online system 140 may rank 340 the content-providing user among a set of additional content-providing users based on a score associated with each user, in which a highest ranked content-providing user is associated with a highest score and a lowest ranked content-providing user is associated with a lowest score. In some embodiments, the online system 140 may include a content-providing user in the ranking only if the content-providing user is associated with a score that is at least a threshold score. In the above example, the online system 140 may compare the score associated with each content-providing user to a threshold score and may not include any content-providing users who are not associated with at least the threshold score in the ranking.

The online system 140 then provides 345 the entity with an option to select a set of "approved" content-providing users of the online system 140 from the ranking, in which each approved content-providing user included among the set of approved content-providing users selected by the entity is authorized to create one or more content items on behalf of the entity. In some embodiments, the online system 140 may provide 345 the option to the entity by sending a user interface for display to the entity (e.g., via a display area of a client device 110 associated with the entity), in which the user interface includes the option. In such embodiments, the online system 140 may generate (e.g., using the user interface generator 260) the user interface. In some embodiments, the user interface may include a set of data associated with each approved content-providing user included in the ranking. In various embodiments, the set of data may include an audience of one or more content items associated with the entity received 305 from each approved content-providing user, an amount of user engagement with each of one or more content items associated with the entity received 305 from each approved content-providing user, a content of one or more content items associated with at least a threshold performance metric received 305 from each approved content-providing user, information describing a history of violation of one or more policies by each approved content-providing user, a number of additional entities having a presence on the online system 140 that have authorized each approved content-providing user to create content items on behalf of each additional entity, etc. In some embodiments, the user interface also may include one or more interactive elements (e.g., check boxes, buttons, radio buttons, etc.) allowing the entity to select the set of approved content-providing users authorized to create one or more content items on behalf of the entity.

An example of the user interface is illustrated in FIG. 4. In this example, the user interface 400 (e.g., a content creation dashboard) includes approved content-providing users 410, in which an approved content-providing user 410 having the highest ranking 405 is in a most prominent position within the user interface 400 and an approved content-providing user 410 having the lowest ranking 405 is in a least prominent position within the user interface 400. As shown in this example, a set of data associated with each approved content-providing user 410 included in the user interface 400 may include demographic information (e.g., gender, geographic location, age, etc.) associated with an audience 415 of a set of content items associated with the entity received 305 from the approved content-providing user 410, and an amount of user engagement 420 (e.g., clicks, likes, shares, comments, etc.) associated with each of the set of content items for various time periods. As also shown in the example of FIG. 4, the set of data associated with each approved content-providing user 410 included in the user interface 400 also may include the content of the top content items 425 (e.g., the most popular content items) received 305 from the approved content-providing user 410, information describing a policy violation history 430 of the approved content-providing user 410 over various time periods, and information describing others 435 who have authorized the approved content-providing user 410 to create content items on their behalf (e.g., the total number of entities, industries/topics related to the entities, etc.). In this example, each approved content-providing user 410 may be associated with a toggle button 407 within the user interface 400 that allows a corresponding approved content-providing user to create content on behalf of the entity 440, such that the entity being presented with the user interface 400 may select an approved content-providing user 410, such as User X, by interacting with a corresponding toggle button 407.

Once the online system 140 has provided 345 the entity with the option to select a set of approved content-providing users of the online system 140 from the ranking, the online system 140 may receive a selection from the entity of an approved content-providing user authorized to create one or more content items on behalf of the entity. In embodiments in which the option is provided 345 to the entity in a user interface that is sent for display to the entity, the online system 140 may receive the selection via an interactive element included in the user interface. In some embodiments, the online system 140 may receive selections from the entity of multiple approved content-providing users authorized to create one or more content items on behalf of the entity.

If the online system 140 receives a selection from the entity of an approved content-providing user authorized to create one or more content items on behalf of the entity, the online system 140 may perform various actions associated with each content item created on behalf of the entity by the approved content-providing user. In some embodiments, the online system 140 may include each content item created on behalf of the entity by the approved content-providing user in a page associated with the entity maintained in the online system 140. For example, one or more content items created on behalf of the entity by the approved content-providing user may be included in a feed of content items and the feed of content items may be included in the page associated with the entity. In various embodiments, the online system 140 also or alternatively may add a link to a page associated with the entity to each content item created on behalf of the entity by the approved content-providing user. For example, the online system 140 may add a tag to each content item created on behalf of the entity by the approved content-providing user, in which the tag includes a link to a page associated with the entity maintained in the online system 140.

In some embodiments, if the online system 140 receives a selection from the entity of an approved content-providing user authorized to create one or more content items on behalf of the entity, the online system 140 may provide a share of an amount of compensation received by the entity to the approved content-providing user. For example, suppose that a viewing user of the online system 140 purchases a product from a page associated with the entity maintained in the online system 140 and that the viewing user accessed the page by clicking on a link included in a content item created on behalf of the entity by the approved content-providing user. In this example, the online system 140 may provide a share of an amount of revenue received by the entity from the purchase to the approved content-providing user.

### Summary

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments also may relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments also may relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following claims.

## Claims

1. A method comprising:
receiving one or more content items from one or more content-providing users of an online system, each of the one or more content items comprising an image;
accessing an item detection model trained to predict a probability that a content item comprises an image of an item associated with an entity having a presence on the online system, the item detection model trained based at least in part on a plurality of content items comprising a plurality of images of one or more items associated with the entity and a set of attributes of each of the plurality of content items;
applying the item detection model to a set of attributes of each of the one or more content items to predict the probability that the content item comprises an image of an item associated with the entity;
determining whether the predicted probability is at least a threshold probability for each of the one or more content items;
responsive to determining that the predicted probability is at least the threshold probability for each of a set of content items, identifying a content-providing user of the online system from whom the set of content items was received;
determining a number of the set of content items received from the content-providing user for which the predicted probability is at least the threshold probability;
computing a score for the content-providing user based at least in part on the number;
ranking the content-providing user among a set of additional content-providing users of the online system based at least in part on the score; and
providing, to the entity, an option to select a set of approved content-providing users of the online system from the ranking authorized to create one or more content items on behalf of the entity.

2. The method of claim 1, wherein the ranking is provided to the entity in association with a set of data associated with each of the set of approved content-providing users, wherein the set of data is selected from the group consisting of: an audience of one or more content items associated with the entity received from each of the set of approved content-providing users, an amount of user engagement with each of one or more content items associated with the entity received from each of the set of approved content-providing users, a content of one or more content items associated with at least a threshold performance metric received from each of the set of approved content-providing users, information describing a history of violation of one or more policies by each of the set of approved content-providing users, a number of additional entities having a presence on the online system that have authorized each of the set of approved content-providing users to create content items on behalf of each additional entity, or any combination thereof.

3. The method of claim 1, further comprising:
inferring a relationship between a content item and a topic associated with the entity based at least in part on information associated with the content item selected from the group consisting of: a tag associated with the topic, a link to a page associated with the topic, a caption associated with the topic, a location associated with the topic, a comment associated with the topic, or any combination thereof.

4. The method of claim 3, wherein the set of attributes of each of the plurality of content items comprises one or more of: a set of pixel values associated with an image of the plurality of images, a tag associated with a content item of the plurality of content items, a caption associated with a content item of the plurality of content items, a location associated with a content item of the plurality of content items, a comment associated with a content item of the plurality of content items, or an inferred relationship between a content item of the plurality of content items and the topic associated with the entity.

5. The method of claim 4, wherein the set of attributes of each of the one or more content items comprises one or more of: a set of pixel values associated with an image comprising the one or more content items, a tag associated with a content item of the one or more content items, a caption associated with a content item of the one or more content items, a location associated with a content item of the one or more content items, a comment associated with a content item of the one or more content items, or an inferred relationship between a content item of the one or more content items and the topic associated with the entity.

6. The method of claim 1, wherein computing the score for the content-providing user comprises:
retrieving information describing a time at which each of the set of content items for which the predicted probability is at least the threshold probability was received from the content-providing user;
determining a frequency with which the content-providing user created the set of content items based at least in part on the number of the set of content items received from the content-providing user for which the predicted probability is at least the threshold probability and the time at which each of the set of content items for which the predicted probability is at least the threshold probability was received from the content-providing user; and
computing the score for the content-providing user based at least in part on the frequency.

7. The method of claim 1, further comprising:
receiving, from the entity, a selection of an approved content-providing user authorized to create one or more content items on behalf of the entity.

8. The method of claim 7, further comprising:
including one or more content items created on behalf of the entity by the approved content-providing user in a page associated with the entity maintained in the online system.

9. The method of claim 7, further comprising:
adding a link to a page associated with the entity maintained in the online system to one or more content items created on behalf of the entity by the approved content-providing user.

10. The method of claim 7, further comprising:
providing a share of an amount of compensation received by the entity to the approved content-providing user.

11. A computer program product comprising a computer readable storage medium having instructions encoded thereon that, when executed by a processor, cause the processor to: perform the method of any of claims 1-10.
